Europäisches Patentamt

(19) **European Patent Office**

Office européen des brevets

(11) Publication number: **0 260 828**
**B1**

(12) EUROPEAN PATENT SPECIFICATION

(45) Date of publication of the patent specification:
08.08.90

(51) Int. Cl.⁵: **F16D 13/64**

(21) Application number: 87307487.6

(22) Date of filing: 25.08.87

(54) Groove pattern for high thermal capacity wet clutch.

(30) Priority: 16.09.86 US 907937

(43) Date of publication of application:
23.03.88 Bulletin 88/12

(45) Publication of the grant of the patent:
08.08.90 Bulletin 90/32

(84) Designated Contracting States:
DE FR GB IT

(56) References cited:
EP-A- 0 128 757
GB-A- 528 885
US-A- 2 927 673
US-A- 2 987 143
US-A- 4 280 609
US-A- 4 287 978

(73) Proprietor: Borg-Warner Automotive, Inc., 3001 W. Big
Beaver Road, Troy Michigan 48084(US)

(72) Inventor: Payvar, Parviz, 4050 Bunker Lane, Wilmette
Illinois 60091(US)

(74) Representative: Allden, Thomas Stanley et al, A.A.
THORNTON & CO. Northumberland House 303-306 High
Holborn, London WC1V 7LE(GB)

ACTORUM AG

## Description

This invention relates to friction facings for wet clutches.

In EP-A 0 128 757 there is generally disclosed a friction facing wherein the facing surface is grooved to receive cooling oil, the grooving having a pattern including at least one annular groove dividing the facing surface into at least two annular bands, the pattern also including a plurality of radial grooves in each band connecting the annular grooves and/or the inner and outer diameters of the friction facing, the radial grooves in each band being out of alignment with the radial grooves of the next adjacent band.

More particularly, the friction facing of EP-A 0 128 757 is for the rotatable friction disc of an oil-cooled disc brake. In that brake, the friction disc is adapted to be brought into engagement with a radial surface in a housing by means of a pressure plate, balls being located in co-operating oppositely inclined recesses in the adjacent faces of the pressure plate and a reaction member, the brake being applied by angularly moving the pressure plate which then moves relatively axially into engagement with the friction disc which thereby is urged into braking engagement with the housing radial surface.

The aforesaid disc brake is susceptible to hot spotting occurring in the pressure plate in the thinner metal sections thereof at the bases of the recesses therein which can cause excessive wear and deterioration in the friction linings. The purpose of the annular groove in the surface of the friction facing is to increase the degree of cooling in the regions of the thinner metal sections at the bases of the recesses for the balls thereby reducing the likelihood of hot spotting in those regions, the annular groove being substantially coincident with a pitch circle of constant diameter upon which such recesses lie in an angularly spaced relationship.

The radial grooves are provided in the facing surface to ensure adequate replenishment of the oil reservoir and are circumferentially displaced from one band to the next to throttle the flow of oil so resisting the centrifugal effect tending to cause dissipation of the flow of oil with consequential loss of cooling.

In accordance with the present invention as claimed, the aforesaid generally disclosed friction facing is characterised in that the friction facing is for a wet clutch plate wherein the number of radial grooves in each succeeding band increases from the inner to the outer band and/or the depth of the radial grooves decreases between the inner band and the outer band.

Prior known clutch facings for wet clutches have a variety of groove patterns formed in the facing, the most common being the waffle pattern, such as shown in US-A 4 280 609. In the waffle pattern, a series of parallel grooves intersect at right angles to a second series of parallel grooves. The oil or other cooling fluid for the wet clutch passes through the groove pattern from the inner edge to the outer edge of the friction facing under the impetus of centrifugal force.

The other types of conventional grooving patterns are shown in Figs. 8 to 11 of US-A 2 927 673. The typical waffle grooving pattern is shown in Fig. 7 of this patent, while a circumferential grooving pattern is shown in Fig. 8. Fig. 9 discloses a waffle pattern with curved grooves, Fig. 10 discloses straight grooves in an angled pattern, and Fig. 11 discloses radial grooves. Another known groove pattern is a single lead spiral groove pattern.

The waffle pattern of grooving is advantageous in that it results in a good distribution of oil to keep the entire surface of the friction facing wet with consequential desirable frictional characteristics and also that the individual waffles or lands allow the friction clutch plate to conform to shift irregularities in the mating plate with attendant absence of "hot spots". However, all of the above waffle patterns have the major disadvantage that a substantial temperature gradient exists in use across the width of the friction facing, partly because in the waffle pattern only approximately one-half of the grooves, namely those in a more or less radial direction, participate actively in heat removal. The resulting equilibrium temperature for the wet clutch facing is not uniform with the highest temperature occurring adjacent the outside diameter of the facing, thus limiting the thermal capacity of the clutch; while the capacity of a substantial portion of the clutch facing is underutilized.

The advantage of the invention in deploying a grooving pattern with at least one annular groove dividing the facing surface into annular bands and with the radial grooves in one band being misaligned with those of the next adjacent band and increasing in number from the inner to the outer band is that substantially more of the groove area as compared with that of the waffle pattern participates in cooling of the friction facing so that a more uniform temperature distribution is provided across the clutch face thus increasing the clutch thermal capacity, while the aforesaid advantages of the waffle pattern are retained.

The aforesaid advantage of the invention is also obtained in deploying a grooving pattern with at least one annular groove dividing the facing surface into annular bands and with the radial grooves in one band being misaligned with those of the next adjacent band and decreasing in depth between the inner and outer bands, again while retaining the advantages of the waffle pattern, coupled with the further advantage that flow balancing is achieved and emptying of the grooves of cooling oil due to centrifugal forces is inhibited by the throttling action of the reducing depth radial grooves.

In order that the present invention may be well understood there will now be described two embodiments thereof, given by way of example, reference being had to the accompanying drawing, in which:

Figure 1 is a partial elevational view of a conventional wet clutch plate and friction facing showing a waffle groove pattern;

Figure 2 is an elevational view of a wet clutch plate and friction facing embodying the present invention, having the improved groove pattern;

Figure 3 is a partial cross sectional view taken on the line 3-3 of Figure 2; and

Figure 4 is a partial cross sectional view similar to Figure 3, but showing an alternative groove configuration.

It has been known for some time that the temperature at the interface between the friction face and the metal mating face during continuous slipping or a wet clutch, such as occurs in starting clutches, reaches an equilibrium value established by a balance between the rate of heat generation and the rate of heat removal by the oil flowing in the grooves of the friction face. This equilibrium temperature, however, is not uniform over the entire friction face, but generally increases from the inside diameter to the outside diameter for the conventional groove patterns currently in use. The highest temperature, therefore, occurs at the outside diameter and limits the thermal capacity of the clutch, while the capacity Of a substantial portion of the clutch facing is underutilized.

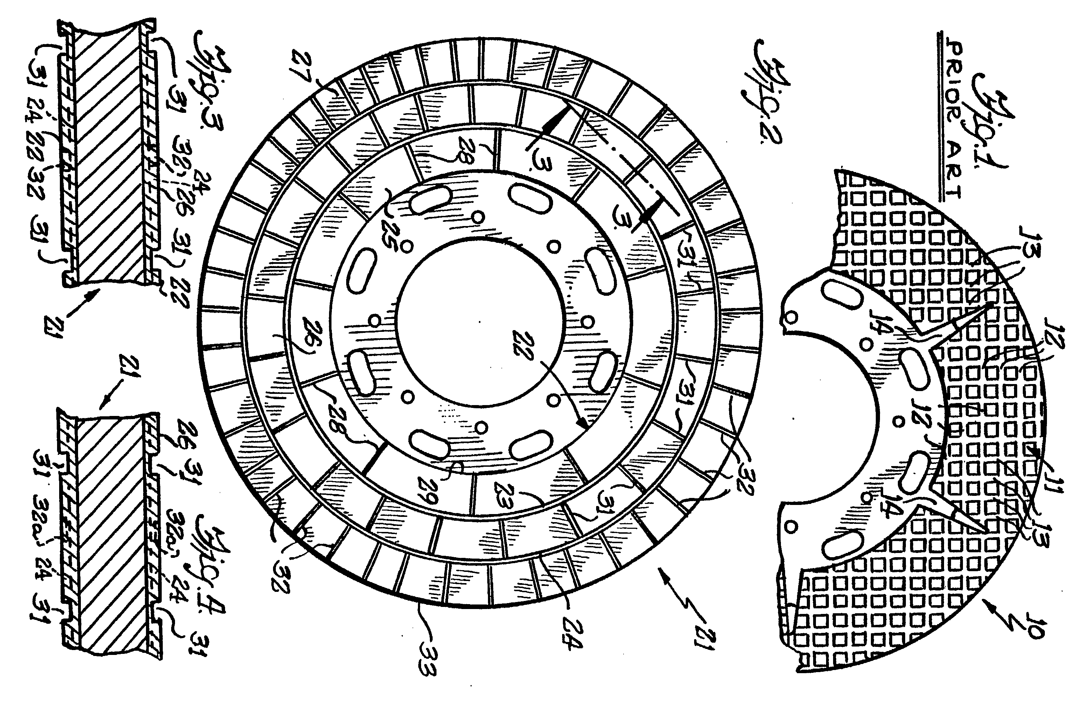

The commonly used grooving pattern shown in Figure 1 is the conventional waffle groove pattern for the friction facings 11 of a wet clutch plate 10 and includes a plurality of grooves 12, 13 in the surface of each facing to form a waffle design or pattern. In this pattern, plurality of generally parallel grooves 12 are formed in each facing extending in one direction, and a second plurality of parallel grooves 13 are arranged at right angles to the grooves 12. Additional radial tapered slots 14 may also be formed in the facing to enhance fluid distribution.

Advantages of the waffle pattern of grooving include a good distribution of oil to keep the entire surface wet resulting in desirable friction characteristics, and that the individual waffles or lands allow the friction plate 10 to conform to shift irregularities in the mating plate resulting in the absence of "hot spots". The major disadvantages of the waffle pattern include that only approximately one-half of the grooves, namely those in a more or less radial direction, participate actively in heat removal. Also, the land area per unit of total area is uniform as is the heat removal area per unit of total area. These two characteristics combine to give an interface temperature which is lowest at the inner diameter and highest at the outer diameter.

To overcome this interface temperature gradient across the clutch plate, the groove pattern of Figures 2 and 3 is utilized on the surfaces of friction facings 22 for a clutch plate 21. This improved grooving pattern includes two annular grooves 23 and 24 separating the racing into three annular areas or bands 25, 26 and 37. In the inner band 25 are located a plurality of circumferentially substantially equally spaced radial grooves 28 extending from the inner diameter 29 of the facing to the first annular groove 23. Likewise, in the intermediate band 26, there are formed a plurality of circumferentially substantially equally spaced radial grooves 31 extending between the annular grooves 23 and 24; the number of grooves 31 being greater than the number of grooves 98.

Further, in the outer band 27 are formed a plurality of circumferentially, substantially equally spaced radial grooves 32 extending from the outer annular groove 94 to the outer diameter 33 of the facing: the number of grooves 32 being greater than the number of grooves 31 in the central band 36. As shown in the specific example Of Figure 2, there are eleven grooves 28, twenty-two grooves 31, and forty-four grooves 32. Although shown as doubling in number from band to band, other numbers of grooves may be used. Also, more than two circumferential grooves may be utilized in the facing resulting in more than three annular bands having the attendant radial grooves. If the friction band is too narrow, a single circumferential groove may be used resulting in two bands with the outer band having a larger number of radial grooves than the inner band.

The purpose of the present invention is to redeploy the available groove area in a more efficient manner so that the interface temperature becomes nearly uniform and almost all of the groove area participates in cooling of the interface. However the improved pattern retains the advantages of the waffle pattern wherein the individual isolated land areas adjust independently of each other to minor irregularities on the surface of the steel mating plate with the absence of "hot spots". The land area per unit of total area is highest near the inner diameter in band 25 and increases gradually toward the outside diameter, thus making the rate of frictional heat generation more uniform compared to other known patterns.

Also, the number of radial grooves increases from the inner to the outer diameter, which brings about a nearly uniform temperature of the interface. It is this characteristic which allows uniform utilization of the interface thermal capacity and, therefore, in an increased overall capacity of the wet clutch. Also, the ratio of the width to the depth of the grooves may be in the order of 2:1 to improve the recirculation of oil within the grooves. The depth of the grooves need not be uniform, but the groove depth may vary in the various bands to achieve flow balancing and to prevent emptying of the grooves due to centrifugal forces upon rotation of the clutch plate. This generally requires the radial groove depth to decrease between the inner band and the outer band. Thus, as seen in Figure 4, the grooves 32a in the outer band 27 are shallower than the grooves 31 in band 26. Likewise the grooves 31 may be shallower than grooves 28 in band 25. Also, the depth of the annular grooves 23 and 24 may be equal or groove 24 may be shallower than groove 23.

## Claims

1. A friction facing (22) wherein the facing surface is grooved to receive cooling oil, the grooving having a pattern including at least one annular groove (23, 24) dividing the facing surface into at least two annular bands (25, 26, 27), the pattern also including a plurality of radial grooves (28, 31, 32) in each band connecting the annular grooves and/or the inner and outer diameters (29, 33) of the friction facing, the radial grooves in each band being out of alignment with the radial grooves of the next adjacent band, characterised in that the friction facing is for a wet clutch plate (21) wherein the number of radial grooves (28, 31, 32), in each succeeding band (25, 26, 27) increases from the inner to the outer band and/or the depth of the radial grooves decreases between the inner band and the outer band.

2. A friction facing as claimed in claim 1, in which the width to depth ratio of the radial grooves (28, 31, 32) is approximately 2:1.

3. A friction facing as claimed in claim 1 or claim 2, in which the radial grooves (28, 31, 32) in each band (25, 26, 27) are circumferentially equally spaced.

4. A friction facing as claimed in any of the preceding claims, in which the annular bands (25, 26, 27) are of substantially equal width.

5. A friction facing as claimed in any of the preceding claims, in which the number of radial grooves (28, 31, 32) in each succeeding band (25, 26, 27) from the inner band (25) substantially doubles.

**Patentansprüche**

1. Reibbelag (22), bei dem die Reibfläche zum Aufnehmen einer Kühlflüssigkeit wie Öl genutet ist und die Nuten in einem Muster angeordnet sind, das wenigstens eine Ringnut (23, 24) zum Unterteilen der Reibfläche in mindestens zwei Ringflächen (25, 26, 27) aufweist und das mehrere radiale Nuten (28, 31, 32) in jeder Ringfläche zum Verbinden der Ringnuten und/oder der inneren und äußeren Durchmesser (29, 33) des Reibbelages aufweist, wobei die radialen Nuten in jeder Ringfläche gegenüber den radialen Nuten in der nächstfolgenden Ringfläche versetzt angeordnet sind, dadurch gekennzeichnet, daß der Reibbelag für eine Naßlaufkupplungsplatte (21) dient, bei der die Anzahl der radialen Nuten (28, 31, 32) in jeder aufeinanderfolgenden Ringfläche (25, 26, 27) von der inneren zur äußeren Ringfläche größer wird und/oder die Tiefe der radialen Nuten zwischen der inneren und der äußeren Ringfläche kleiner wird.

2. Reibbelag nach Anspruch 1, bei dem das Verhältnis der Breite zur Tiefe der radialen Nuten (28, 31, 32) etwa 2:1 beträgt.

3. Reibbelag nach Anspruch 1 oder 2, bei dem die radialen Nuten (28, 31, 32) in jeder Ringfläche (25, 26, 27) am Umfang in gleichen Abständen angeordnet sind.

4. Reibbelag nach einem der vorhergehenden Ansprüche, bei dem die ringförmigen Flächen (25, 26, 27) im wesentlichen die gleiche Breite aufweisen.

5. Reibbelag nach einem der vorhergehenden Ansprüche, bei dem die Anzahl der radialen Nuten (28, 31, 32) in jeder aufeinanderfolgenden Ringfläche (25, 26, 27) von der inneren Ringfläche (25) aus im wesentlichen um das doppelte ansteigt.

**Revendications**

1. Garniture de friction (22) dans laquelle la surface de la garniture est rainurée pour recevoir de l'huile de refroidissement, les rainures se présentant en motif qui comporte au moins une rainure annulaire (23, 24) divisant la surface de la garniture en au moins deux bandes annulaires (25, 26, 27), le motif comportant aussi une multitude de rainures radiales (28, 31, 32) dans chaque bande reliant les rainures annulaires et/ou les diamètres intérieur et extérieur (29, 33) de la garniture de friction, les rainures radiales dans chaque bande n'étant pas alignées avec les rainures radiales de la bande contiguë suivante, caractérisée en ce que la garniture de friction est destinée à un disque d'embrayage humide (21) dans lequel le nombre de rainures radiales (28, 31, 32) dans chacune des bandes se suivant (25, 26, 27) augmente entre la bande intérieure et la bande extérieure et/ou la profondeur des rainures radiales diminue entre la bande intérieure et la bande extérieure.

2. Garniture de friction selon la revendication 1, dans laquelle le rapport entre la largeur et la profondeur des rainures radiales (28, 31, 32) est approximativement 2:1.

3. Garniture de friction selon la revendication 1 ou la revendication 2, dans laquelle les rainures radiales (28, 31, 32) dans chaque bande (25, 26, 27) sont circonférentiellement distantes les unes des autres de la même valeur.

4. Garniture de friction selon l'une quelconque des revendications précédentes, dans laquelle les bandes annulaires (25, 26, 27) ont sensiblement la même largeur.

5. Garniture de friction selon l'une quelconque des revendications précédentes, dans laquelle le nombre des rainures radiales (28, 31, 32) dans chacune des bandes se suivant (25, 26, 27) à partir de la bande intérieure (25) est sensiblement doublé.

Fig.1.
PRIOR ART

Fig.2.

Fig.3.

Fig.4.